# EUROPÄISCHE PATENTSCHRIFT

(11) **EP 0 494 394 B1**
(45) Veröffentlichungstag und Bekanntmachung des Hinweises auf die Patenterteilung: **12.10.1994**
(21) Anmeldenummer: 91121245.4
(22) Anmeldetag: 11.12.1991
(51) Int. Cl.: B60G 3/20, B60G 13/00, B60G 7/00

(54) **Unabhängige Radaufhängung für Kraftfahrzeuge**
Independent wheel suspension for automotive vehicles
Suspension de roue indépendante pour véhicules automobiles

(30) Priorität: 08.01.1991 DE 4100295
(43) Veröffentlichungstag der Anmeldung: 15.07.1992
(73) Patentinhaber: MERCEDES-BENZ AG, 70327 Stuttgart (DE)
(72) Erfinder: Mauz, Uwe, Dipl.-Ing., W-7300 Esslingen (DE)

(56) Entgegenhaltungen:
- EP-A- 0 083 235
- EP-A- 0 401 547
- DE-A- 2 446 417
- DE-B- 1 224 166
- GB-A- 658 387
- GB-A- 1 152 095
- US-A- 2 752 178
- US-A- 4 026 578
- PATENT ABSTRACTS OF JAPAN vol. 2, no. 135 (M-38)(4393) 10. November 1978 & JP-A-53 102 530 (TOYOTA JIDOSHA) 9. Juni 1978

## Beschreibung

Die Erfindung betrifft eine unabhängige Radaufhängung für Kraftfahrzeuge, mit den Merkmalen des Oberbegriffs von dem Patentanspruch.

Eine Radaufhängung dieser Bauart ist als Vorderachsaufhängung bereits bekannt (DE-AS 12 24 1 66). Bei ihr bildet der Momenten-Abstützhebel eine an einem Lenkhebel des Radträgers angelenkte Spurstange, die mit ihrem inneren Ende an einem in Fahrzeugquerrichtung beweglich angeordneten Lenkgehäuse einer Zahnstangenlenkung angelenkt ist. Die äußeren und inneren Anlenkpunkte der Spurstange befinden sich dabei im wesentlichen in Höhe der Raddrehachse.

Der sich in Fahrzeugquerrichtung erstreckende Lenkerarm des Schräglenkers stützt sich, zur Fahrzeugaußenseite hin leicht abfallend, am Kugelgelenk ab.

Obgleich die Anordnung des Schräglenkers unter dem sich unterhalb der Höhe der Raddrehachse befindenden Karosserieboden eine schon verhältnismäßig tiefliegende Anordnung desselben ermöglicht, eignet sich diese Radaufhängung, im Hinblick auf die Positionierung der Spurstange oberhalb des Schräglenkers, nicht dazu, den Karosserieboden auch zwischen den Rädern einer mit solchen Radaufhängungen ausgestatteten Fahrzeugachse entsprechend tiefliegend hindurchzuführen, da Zahnstangenlenkung und Spurstange in einem sich in Fahrzeugquerrichtung erstreckenden und sich über das Niveau des Karosseriebodens erhebenden, nach unten offenen Bodentunnel untergebracht sind.

Das den Schräglenker außen abstützende Kugelgelenk ist am unteren Ende des Stoßdämpfers eines Dämpferbeines befestigt. Das Kugelgelenk befindet sich dabei noch verhältnismäßig weit oberhalb der Radaufstandsebene.

Ferner ist es durch die US-PS 2,752,178 bekannt, bei einer unabhängigen Vorderradaufhängung das außenliegende, sich am Radträger über ein Kugelgelenk abstützende Ende eines unteren Führungslenkers am äußeren Ende nach oben abzukröpfen, so daß das Kugelgelenk unterhalb der Abkröpfung mit dem Radträger verbunden ist und an diesem nahe dem Radinnenumfang liegt. Die Aufnahme des Kugelgelenks erfolgt dabei an einer Abdeckung, die von unten an das abgewinkelte untere Ende des Radträgers angeschraubt ist, das vom Kugelgelenk durchsetzt und von dem abgekröpften Ende des Lenkers übergriffen ist.

Der Erfindung liegt die Aufgabe zugrunde, eine Radaufhängung gemäß dem Oberbegriff des Patentanspruchs so auszubilden, daß auch über der Achse eine besonders tief liegende Anordnung des Fahrzeugbodens mit entsprechend geringer Einstiegshöhe ermöglicht wird, wie dies im besonderen für Omnibusse, und insbesondere Niederflurormnibusse angestrebt wird.

Diese Aufgabe wird erfindungsgemäß durch die kennzeichnenden Merkmale des Patentanspruches gelöst.

Die erfindungsgemäß vorgesehene Abkröpfung des sich am Kugelgelenk abstützenden, außenliegenden Endes des Schräglenkers schräg nach außen und oben, in Verbindung mit der tiefliegenden Positionierung des Kugelgelenks im Rad innen, sowie die gegenseitige Zuordnung von Schräglenker und Momenten-Abstützhebel ermöglichen ein besonders tiefes Niveau des Fahrzeugbodens. Durch die erreichte niedrige Lage des als Lenkspurhebel dienenden Traggliedes mit zugeordnetem Anschlußteil ergibt sich darüberhinaus für den Lenkspurhebel eine Bewegungsbahn, die Freiraum zur radnahen Unterbringung einer Luftfeder erbringt. Da zudem der Gelenkpunkt des Kugelgelenkes nahe an die Radmittenebene herangerückt ist, werden am Radträger angreifende Kippmomente und aus Brems- und Beschleunigungsvorgängen erwachsende Störhebel klein gehalten. Die Positionierung des Kugelgelenkes in Verbindung mit der Abschirmung desselben durch den Radträger und das Tragglied des Kugelgelenkes führt ferner zu einer trotz der geringen Bodenfreiheit geschützten Lage, wobei die einstückige Ausbildung des Traggliedes mit Anschlußteil auch eine sehr flache Bauweise für den durch diese Teile gebildeten Lenkspurhebel ergibt.

Die Erfindung wird im folgenden anhand eines Ausführungsbeispieles näher erläutert. Es zeigen:
- Figur 1: eine Vorderansicht einer mit unabhängigen Radaufhängungen ausgestatteten, gelenkten Achse für einen Niederflurbus,
- Figur 2: einen Schnitt durch die Lenkachse entlang der Linie II-II der Figur 1,
- Figur 3: eine Draufsicht auf die Darstellung gemäß Figur 2
- Figur 4: eine Ansicht auf den unteren Teil des Radträgers, in Richtung des Pfeiles C der Figur 1 gesehen,
- Figur 5: einen Schnitt entlang der Linie V-V der Figur 4,
- Figur 6: einen Schnitt entlang der Linie VI-VI der Figur 4
Die gezeigte Lenkachse weist zwei einander entsprechende Einzelradaufhängungen auf, von denen lediglich eine gezeigt ist. Diese umfaßt einen Radträger 10, auf dessen Lagerzapfen 12 ein Rad 14 drehbar gelagert ist. Der Radträger 10 ist mittels eines unteren Schräglenkers 16, eines beispielsweise als Dämpferbein 18 ausgebildeten oberen Radführungsgliedes und einer Lenkeinrichtung 19 geführt.

Der Schräglenker 16 ist aus einem sich vorzugsweise über die Fahrzeuglängsmittenebene a-a hinaus erstreckenden, einen Querlenker bildenden Lenkerarm 20 und einem mit diesem starr verbundenen, einen Längslenker bildenden Lenkerarm 22 gebildet, der, in Draufsicht betrachtet und, bezogen auf die Fahrtrichtung F, hinter der Raddrehachse 24 liegt und sich schräg nach vorne und außen und in der Konstruktionslage im wesentlichen horizontal erstreckt.

Der Lenkerarm 20 befindet sich für diese Radaufhängung, bezogen auf die Fahrtrichtung F, ausgehend von seiner Verbindungsstelle mit dem Lenkerarm 22, vor der Raddrehachse 24. Dementsprechend ist der entsprechende Lenkerarm für die gegenüberliegende Radaufhängung hinter der Radachse 24 vorgesehen.

Die aufbaufesten Lager 23 und 25 beider Lenkerarme 20 und 22 definieren aufgrund einer entsprechend gewählten Lenkerlänge und einer entsprechenden Lenkereinpassung eine Schräglenker-Schwenkachse 26, die, in Draufsicht betrachtet, und mit bezug auf die Fahrtrichtung F, hinter der Raddrehachse 24 liegt und sich schräg von innen nach außen hinten erstreckt. Sie nimmt dabei eine Schräglage zwischen 35° und 60°, vorzugsweise 50°, zur Fahrzeuglängsmittenebene a-a ein.

Für den Schräglenker 16 ist damit aufbauseitig eine entsprechend breite Abstützbasis geschaffen, wobei aus der Längenauslegung der beiden Lenkerarme 20 und 22 und der Einpassung des Schräglenkers 16 in die Lenkachse eine Achskinematik resultiert, durch die sich u. a. bei Ein- und Ausfederungen Sturzänderungen auf einem Kleinstwert halten lassen.

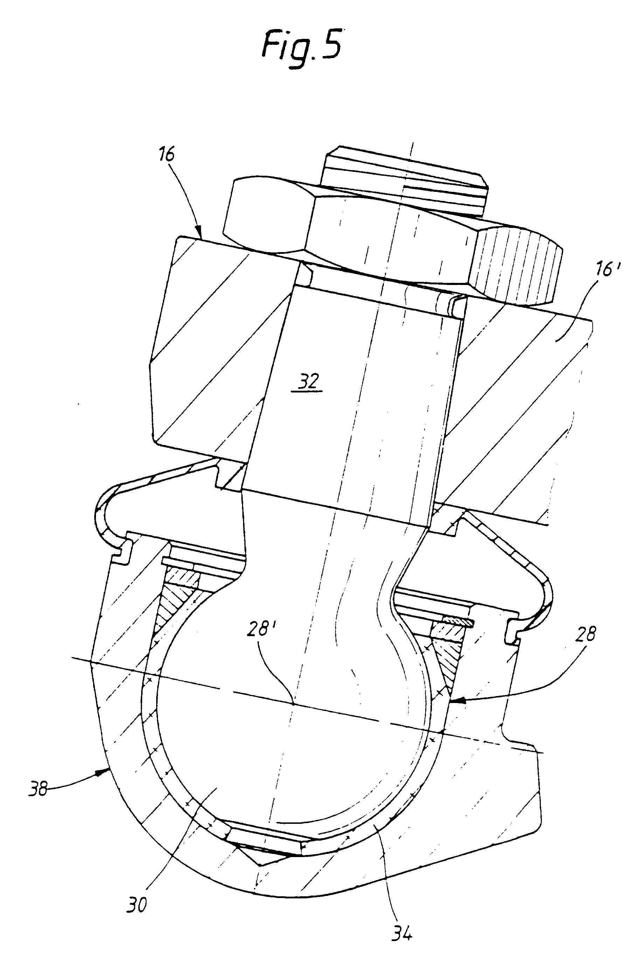

Die Anlenkung des Schräglenkers 16 am Radträger 10 ist mittels eines hängenden Traggelenkes 28 (siehe Figur 5) bewerkstelligt, das ein Kugelgelenk bildet. Dessen Gelenkkugel 30 sitzt an einem vorzugsweise konischen Zapfen 32, der seinerseits im radträgerseitigen Endstück 16' des Schräglenkers 16 derart gehalten ist, daß sich die Gelenkkugel 30 an der Lenkerunterseite befindet.

Eine die Gelenkkugel 30 aufnehmende Lagerpfanne 34 ist in einem Endstück eines an der Unterseite des Radträgers 10 innerhalb der Radfelge 36 befestigten Traggliedes 38, vorzugsweise durch Einformen, vorgesehen. Die Lagerpfanne 34 befindet sich hierbei zwischen zwei in gleicher Ebene vorgesehenen, oberen Lenkhebel-Spannflächen 40 und 42, zu denen, bei montierten Traggelenk 28, dessen Zapfen 32 in spitzem Winkel nach oben und in Fahrzeugquerrichtung nach innen gerichtet ist.

Die Spannflächen 40 und 42 bilden jeweils eine obere Stirnfläche eines an das Tragglied 38 angeformten Befestigungsauges 44 bzw. 46, das jeweils von einer Bohrung 48 bzw. 50 durchsetzt ist.

Fluchtend zu diesen Bohrungen 48 bzw. 50 sind auch untere Befestigungsaugen 52 und 54 des Radträgers 10 von jeweils einer Bohrung 56 bzw. 58 durchdrungen. Diese Befestigungsaugen 52 und 54 begrenzen eine sich in Fahrzeugquerrichtung nach innen öffnende Vertiefung 59 des Radträgers 10, welche das auf dem Zapfen 32 des Traggelenkes 28 sitzende Endstück 16' des Schräglenkers 16 z. T. aufnimmt.

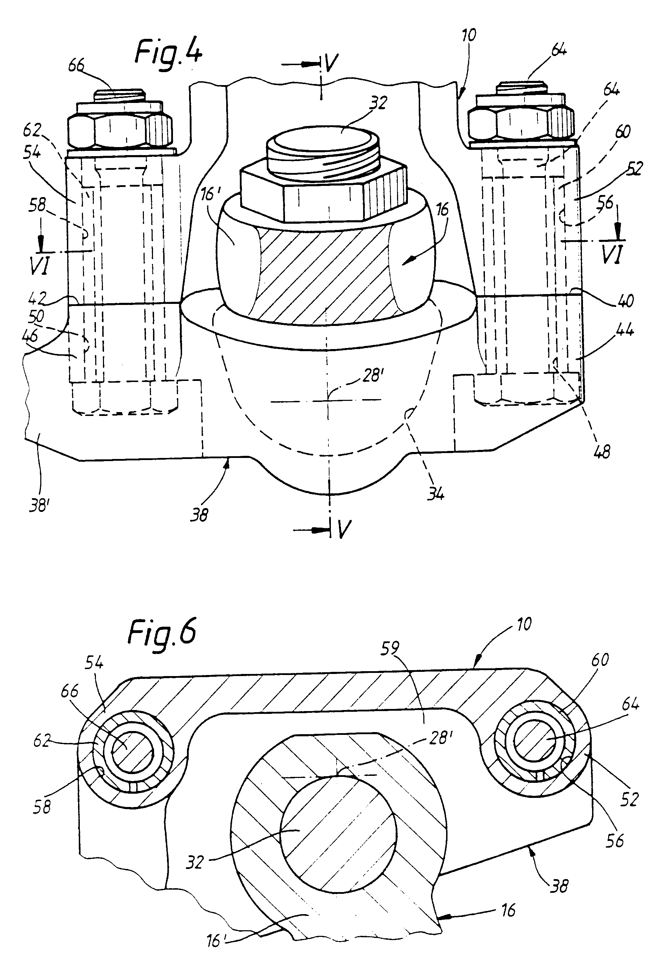

Mittels jeweils einer in die Bohrungen 48, 50, 56, 58 eingebrachten Scherbuchse 60 bzw. 62 und den Schrauben 64 und 66 (siehe Figur 4) ist das Tragglied 38 am Radträger 10 lösesicher festgelegt.

Vom Tragglied 38 erstreckt sich in Fahrtrichtung F ein in Fahrzeugquerrichtung nach innen abragender Anschlußteil 38' weg. Beide Teile 38 und 38' bilden zusammen einen Lenkhebel.

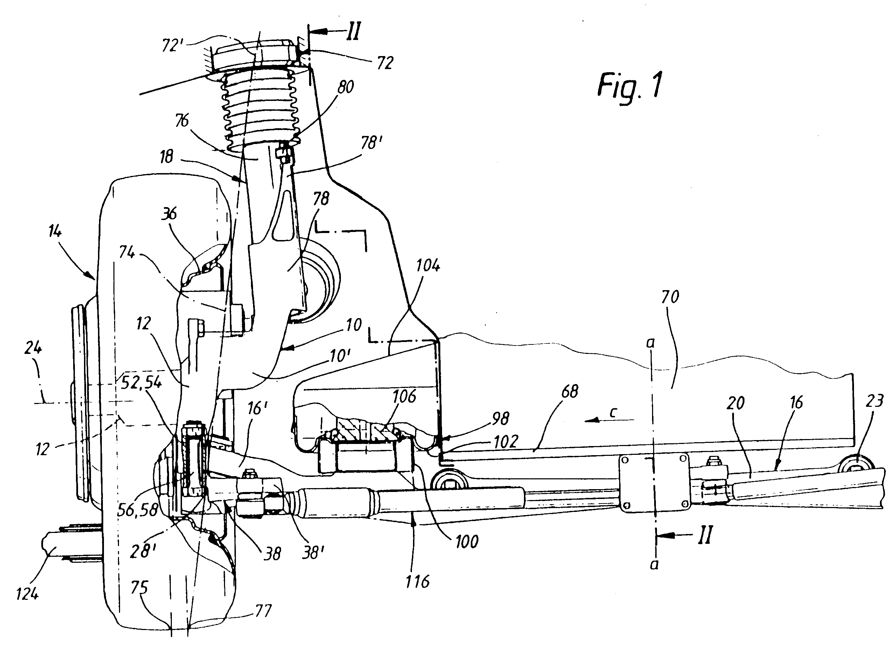

Wie Figur 1 zeigt, befindet sich das Traggelenk 28 bzw. dessen Gelenkpunkt 28' ungefähr in der Horizontalebene, in der sich der die größere Länge aufweisende und in Fahrzeugquerrichtung gerichtete Lenkerarm 20 des Schräglenkers 16 erstreckt. Dies ist durch entsprechendes Abkröpfen des Schräglenkerendstückes 16' schräg nach oben erreicht. Dadurch ist es möglich, die Höhe eines Fußbodens 68, beispielsweise eines in der Fahrzeuglängsmittenebene a-a verlaufenden Durchganges 70 eines Omnibusaufbaus, über den Achsen sehr tief legen zu können.

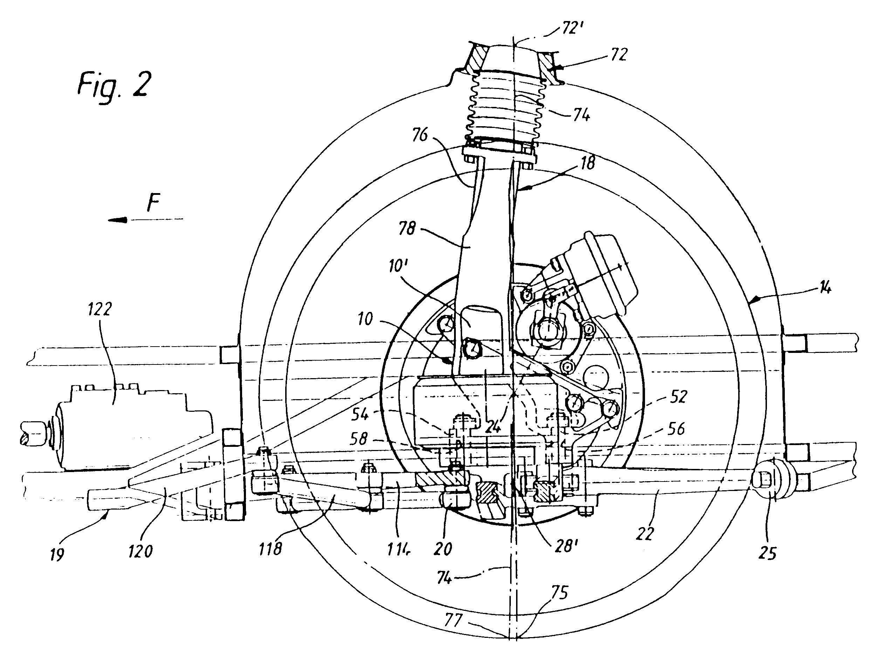

Wie die Figuren 1 und 2 zeigen, ist das Dämpferbein 18 vorzugsweise so in die Einzelradaufhängung eingepaßt, daß es sich von dessen oberem, aufbaufesten, elastischen Führungsgelenk 72 in Fahrzeugquerrichtung schräg nach innen unten, und bezogen auf die Fahrtrichtung F, nach vorne unten erstreckt.

Der Gelenkpunkt 28' des Traggelenkes 28 und der Gelenkpunkt 72' des Führungsgelenkes 72 des Dämpferbeines 18 definieren eine Lenkachse 74, aus deren Verlauf sich einerseits, aufgrund entsprechender Spreizung, ein positiver Lenkrollhalbmesser und andererseits ein, in Fahrtrichtung F gesehen, vor dem Radaufstandspunkt 75 liegender Spurpunkt 77 und damit ein positiver Radnachlauf ergibt.

Das untere Endstück des Zylinderrohres 76 des Dämpferbeines 18 endet in entsprechend großem Abstand oberhalb des Schräglenker-Endstückes 16' (siehe Figur 1) und ist hierzu in einem nach oben gerichteten Hals 78 gehalten, der von einem sich oberhalb des Lenkerendstückes 16' in Fahrzeugquerrichtung erstreckenden Radträgeransatz 10' gehalten ist.

Die Schräglenkeranordnung stellt auch bei Federbewegungen des Rades 14 eine weitgehende Konstanz der Spreizung sicher.

Die Biegebeanspruchung des Dämpferbein-Zylinderrohres 76 durch aus Quer- und Längskräften erwachsenden Biegemomenten ist dadurch entsprechend vermindert, daß ein Abstützelement in Form einer Halsverlängerung 78' vorgesehen ist, die das Zylinderrohr 76 über einen Teil seiner Länge teilweise umgreift.

Um für das Rad 14 bei Einfederung genügenden Freigang zu schaffen, stützt sich die Halsverlängerung 78' vorzugsweise an dem der Fahrzeuglängsmittenebene a-a zugekehrten Rohrumfangsteil ab. Dabei ist an dieser Abstützseite zur Erzeugung der erforderlichen Reaktionskraft eine Verschraubung 80 der Halsverlängerung 78' an deren freiem Ende mit dem Rohrmantel vorgesehen.

Die untere Abstützung des Dämpferbeines 18, weit oberhalb des abgekröpften Schräglenkerendstückes 16' bietet den Vorteil, eine Luftfeder 98 innerhalb der Einzelradaufhängung in radnahem Bereich vorsehen zu können. Deren Stützkolben 100 ist dabei auf dem Schräglenker 16 und deren Luftbalg 102 mit einer Deckelplatte an einer aufbaufesten Konsole 104 abgestutzt.

Diese, den Durchgang 70 des Omnibusaufbaues entsprechend breit auszulegen gestattende Luftfederanordnung ermöglicht ein günstiges Übersetzungsverhältnis für die Luftfeder 98 und eine Dimensionierung ihres Luftbalges 102, die es ermöglicht, auf eine Zusatzfeder in Form einer Schaubenfeder aus Stahl oder z. B. eine glasfaserverstärkte Kunststoffeder als Querblattfeder verzichten zu können.

106 bezeichnet einen in den Luftbalg 102 integrierten Puffer für einen progressiven Kennlinienverlauf nach einem vorbestimmten Einfederweg.

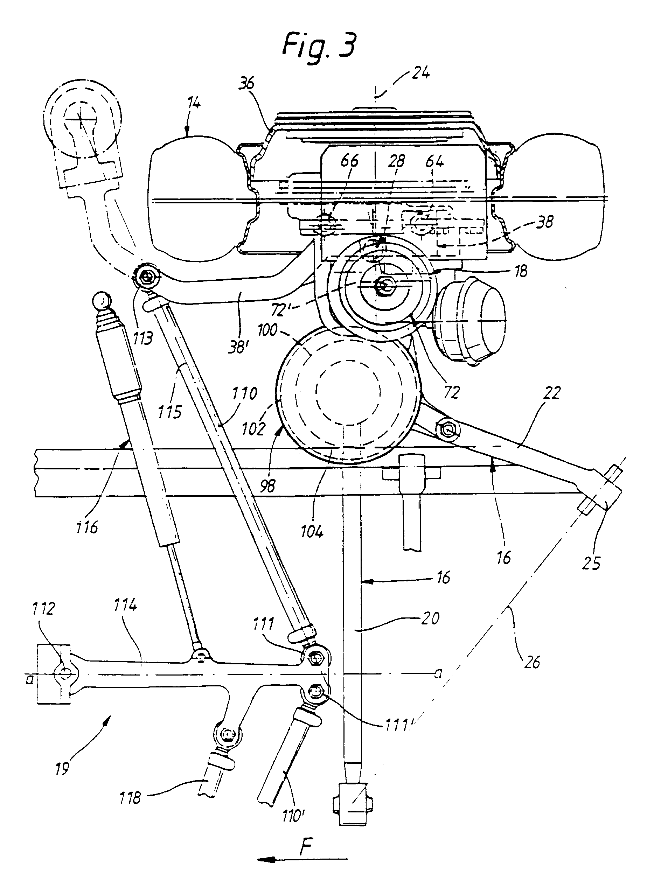

Wie Figur 3 zeigt, erstreckt sich der Lenkhebel 38, 38', bezogen auf die Fahrtrichtung F, vor der Raddrehachse 24 aus der Radfelge 36 heraus und im wesentlichen horizontal in Fahrtrichtung F. An dessen freiem Ende ist mit seinem einen Ende ein Spurstangenteilstück 110 einer beispielsweise zweigeteilten Spurstange angelenkt, deren anderes Ende an einem aufbauseitig in der Fahrzeuglängsmittenebene a-a um eine vertikale Achse 112 verschwenkbaren Lenkzwischenhebel 114 angelenkt ist, von dem sich auch ein weiteres Spurstangenteilstück 110' in Richtung auf die andere Einzelradaufhängung weg erstreckt.

Das innere Gelenk 111 bzw. 111' beider Spurstangenteilstücke 110, 110' am Lenkzwischenhebel 114 befindet sich in wesentlich kleinerem Abstand zu der die Raddrehachse 24 enthaltenden Fahrzeugquerebene als deren lenkhebelseitiges Gelenk 113.

116 bezeichnet einen am Lenkzwischenhebel 114 angelenkten Lenkungsdämpfer, während 118 einen durch einen Lenkstockhebel 120 (Figur 2) eines Lenkgetriebes 122 verstellbaren Lenkstange bezeichnet.

## Patentansprüche

1. Unabhängige Radaufhängung für Kraftfahrzeuge mit einem unterhalb des sich unter der Höhe der Raddrehachse (24) befindenden Karosseriebodens (68) angeordneten Schräglenker (16), der aus einem sich in Fahrzeugquerrichtung erstreckenden Lenkerarm (20) und einem von dessen radseitigem Endbereich nach hinten schräg zur Fabrzeuglängsmittelebene (a-a) hin verlaufenden Lenkerarm (22) gebildet ist, welcher Schräglenker (16) mit seinem äußeren Lenkerende in ein auf einem Radträger (10) gelagertes Fahrzeugrad (14) eingreift und dort über ein Kugelgelenk (28) am Radträger (10) abgestützt ist und der mit dem inneren Ende seines sich in Fahrzeugquerrichtung erstreckenden Lenkerarmes (20) im Bereich der Fahrzeuglängsmittelebene (a-a) elastisch angelenkt ist, und mit einem an einem radträgerfesten Hebel (38) angelenkten, sich in Fahrzeugquerrichtung erstreckenden Momenten-Abstützhebel (110),
**dadurch gekennzeichnet,**
daß Schräglenker (16) und Momenten-Abstützhebel (Spurstangenteilstück 110) im wesentlichen in eine gemeinsame Horizontalebene gelegt sind, daß das außenliegende, sich am Kugelgelenk (28) abstützende Ende des Schräglenkers (16) schräg nach oben außen abgekröpft ist, daß das Kugelgelenk (28) am Radträger (10) nahe dem Radinnenumfang angeordnet ist, daß das abgekröpfte Lenkerendstück (16') in eine sich zur Fahrzeuginnenseite hin öffnende Vertiefung (59) des Radträgers (10) eingreift, die nach unten durch ein am Radträger (10) befestigtes, das Kugelgelenk (28) abstützendes Tragglied (38) verschlossen ist und daß der Momenten-Abstützhebel (Spurstangenteilstück 110) an einem vom Tragglied (38) in Fahrzeugquerrichtung nach innen abragenden Abschlußteil (38') angelenkt ist.

## Claims

1. An independent wheel suspension for motor vehicles with a tilted shaft (16) disposed underneath the body work floor (68) which is below the height of the axis (24) of wheel rotation and which consists of a control arm (20) extending in the transverse direction of the vehicle and, extending from the wheel-side end portion thereof and rearwardly obliquely to the median longitudinal plane (a-a) through the vehicle, a control arm (22), said tilted shaft (16) having its outer end engaging a vehicle wheel (14) mounted on a wheel carrier (10) being supported there via a ball joint (28) on the wheel carrier (10) while the inner end of its control arm (20) which extends in the transverse direction of the vehicle is elastically articulated in the region of the longitudinal central plane (a-a) through the vehicle and with, articulated on a lever (38) rigid with the wheel carrier and extending in the transverse direction of the vehicle, a torque supporting lever (110), characterised in that the tilted shaft (16) and torque supporting lever (track rod part 110) are situated substantially in a common horizontal plane and in that the outer end of the tilted shaft (16) braced on the ball joint (28) is cranked outwardly and obliquely upwardly and in that the ball joint (28) on the wheel carrier (10) is disposed close to the inner periphery of the wheel and in that the cranked end piece (16') of the shaft engages a depression (59) in the wheel carrier (10) which is open towards the interior of the vehicle and which is closed at the bottom by a supporting member (38) which supports the ball joint (28) and which is fixed on the wheel carrier (10) and in that the torque bracing lever (track rod part 110) is articulated on an end portion (38') projecting inwardly from the supporting member (38) and in the transverse direction of the vehicle.

## Revendications

1. Suspension de roue indépendante pour véhicules automobiles, comprenant un bras oscillant incliné (16), placé sous le plancher (68) de la carrosserie, se trouvant lui-même sous la hauteur de l'axe de rotation (24) de la roue, bras oscillant incliné qui est constitué d'un bras de suspension (20) s'étendant dans le sens transversal du véhicule et d'un bras de suspension (22) s'étendant, à partir de sa partie extrême côté roue, vers l'arrière, obliquement par rapport au plan longitudinal médian (a-a) du véhicule, le bras oscillant incliné (16) pénétrant par son extrémité de bras extérieure dans une roue de véhicule (14), montée sur un support de roue (10), et étant appuyé à cet endroit, par l'intermédiaire d'un joint sphérique (28), sur le support de roue (10), l'extrémité intérieure de son bras de suspension (20), s'étendant dans le sens transversal du véhicule, étant articulée élastiquement dans la zone du plan longitudinal médian (a-a) du véhicule, et comprenant un levier d'appui des moments (110), s'étendant dans le sens transversal du véhicule et articulé sur un levier (38) solidaire du support de roue,
caractérisé en ce que le bras oscillant incliné (16) et le levier d'appui des moments (partie 110 de la barre d'accouplement) sont placés essentiellement dans un plan horizontal commun, que l'extrémité du bras oscillant incliné (16) située à l'extérieur, extrémité qui s'appuie sur le joint sphérique (28), est pourvue d'un double coude dirigé obliquement vers le haut et vers l'extérieur, que le joint sphérique (28) est placé sur le support de roue (10) près de la périphérie intérieure de la roue, que la partie extrême (16') à double coude du bras oscillant pénètre dans un creux (59) du support de roue (10) s'ouvrant vers le côté intérieur du véhicule, creux qui est fermé en bas par un élément de support (38) fixé au support de roue (10) et supportant le joint sphérique (28), et que le levier d'appui des moments (partie 110 de la barre d'accouplement) est articulé sur une pièce de raccordement (38') faisant saillie vers l'intérieur, dans le sens transversal du véhicule, de l'élément de support (38).
